(19) Europäisches Patentamt
European Patent Office
Office européen des brevets

(11) **EP 3 023 205 B1**

(12) **EUROPÄISCHE PATENTSCHRIFT**

(45) Veröffentlichungstag und Bekanntmachung des Hinweises auf die Patenterteilung:
**23.02.2022 Patentblatt 2022/08**

(21) Anmeldenummer: **15194957.5**

(22) Anmeldetag: **17.11.2015**

(51) Internationale Patentklassifikation (IPC):
**B25J 9/16** $^{(2006.01)}$ **B25J 9/00** $^{(2006.01)}$
**G09B 9/12** $^{(2006.01)}$

(52) Gemeinsame Patentklassifikation (CPC):
**B25J 9/003; B25J 9/1615; B25J 9/1623; G09B 9/12; G05B 2219/39065; G05B 2219/49278; G05B 2219/50162**

(54) **VERFAHREN ZUM ERMITTELN EINER BEWEGUNGSGRENZE**

METHOD FOR DETERMINING A MOVEMENT LIMIT

PROCÉDÉ DE DÉTERMINATION D'UNE LIMITE DE DÉPLACEMENT

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **18.11.2014 DE 102014116845**

(43) Veröffentlichungstag der Anmeldung:
**25.05.2016 Patentblatt 2016/21**

(73) Patentinhaber: **Deutsches Zentrum für Luft- und Raumfahrt e.V.**
**51147 Köln (DE)**

(72) Erfinder: **Seehof, Carsten**
**38110 Braunschweig (DE)**

(74) Vertreter: **Aisch, Sebastian**
**Gramm, Lins & Partner**
**Patent- und Rechtsanwälte PartGmbB**
**Freundallee 13 a**
**30173 Hannover (DE)**

(56) Entgegenhaltungen:
**CA-A1- 2 744 444**

• Serdar Ay ET AL: "Determination of the Reachable Workspace of 6-3 Stewart Platform Mechanism", Proceedings of the World Congress on Engineering 2012 Vol III, 4. Juli 2012 (2012-07-04), Seiten 1851-1855, XP055269210, London, UK ISBN: 978-988-1925-22-0 Gefunden im Internet: URL:http://www.iaeng.org/publication/WCE2012/WCE2012_pp1851-1855.pdf [gefunden am 2016-04-28]
• D.J. KIM ET AL: "Geometrical approach for the workspace of 6-DOF parallel manipulators", ROBOTICS AND AUTOMATION, 1997. PROCEEDINGS., 1997 IEEE INTERNATIONAL CONFERENCE ON ALBUQUERQUE, NM, USA 20-25 APRIL 1997, Bd. 4, 20. April 1997 (1997-04-20), Seiten 2986-2991, XP055269323, New York, NY, USA. DOI: 10.1109/ROBOT.1997.606741 ISBN: 978-0-7803-3612-4
• J. BESSALA ET AL: "Analytical study of Stewart platform workspaces", 1996 IEEE INTERNATIONAL CONFERENCE ON ROBOTICS AND AUTOMATION (ICRA); 22-28 APRIL 1996; MINNEAPOLIS, MINNESOTA, GERMANY, Bd. 4, 22. April 1996 (1996-04-22), Seiten 3179-3184, XP055269310, US ISSN: 1050-4729, DOI: 10.1109/ROBOT.1996.509196 ISBN: 978-1-4673-5641-1

**Beschreibung**

Die Erfindung betrifft ein Verfahren zum Ermitteln einer Bewegungsgrenze eines Bewegungssystems, das eine mittels Aktuatoren gegenüber einer festen Referenzebene in mehreren Freiheitsgraden bewegbare Plattform aufweist, wobei die Aktuatoren sowohl an der festen Referenzebene als auch an der bewegbaren Plattform gelenkig angeordnet und zur Längenänderung zwecks Bewegen der bewegbaren Plattform ausgebildet sind. Die Erfindung betrifft ebenso ein Verfahren zur Ansteuerung eines derartigen Bewegungssystems, ein Computerprogramm sowie eine Vorrichtung hierzu.

Mit Hilfe von Bewegungssimulatoren lassen sich Bewegungen in der realen Welt simulieren, beispielsweise Bewegungen eines Fahrzeugs, Flugzeugs, oder dergleichen. Mittels solcher Bewegungssimulatoren lässt sich einem Fahrer des Fahrzeuges das Gefühlt vermitteln, als ob er das Fahrzeug tatsächlich durch die reale Welt steuern würde. So sind beispielsweise Simulatoren aus dem Stand der Technik bekannt, bei denen im Sichtfeld des Fahrers eine Bildprojektionseinrichtung angeordnet ist, welche dem Fahrer ein Bild der äußeren Umgebung des Fahrzeuges anzeigt. Führt der Fahrer des Fahrzeugsimulators nun Steuerungsaufgaben durch, wie beispielsweise Beschleunigen, Abbremsen oder Lenkeingaben, so wird je nach Steuereingabe das auf der Bildprojektionseinrichtung angezeigte Umgebungsbild an die Steuereingabe entsprechend angepasst und verändert, so dass der Fahrer das Gefühl erhält, er bewege das Fahrzeug tatsächlich durch die äußere Umgebung des Fahrzeuges.

Neben feststehenden Simulatoren, bei denen lediglich durch das dargestellte

Außenbild und dessen Veränderung die Bewegung des Fahrzeuges simuliert wird, sind auch Simulatoren bekannt, die zusätzlich hierzu ein Bewegungssystem aufweisen, welches zum Simulieren der auftretenden Bewegungen und Beschleunigungen innerhalb der Simulation in einem definierten Bewegungsraum eingerichtet sind. Dabei lassen sich innerhalb des Bewegungsraumes je nach Simulatortyp bis zu 6 grundlegende Freiheitsgrade durch das Bewegungssystem abbilden. Insbesondere bei der Simulation von Luftfahrzeugen werden Bewegungssysteme verwendet, die eine Abbildung der Bewegung des Luftfahrzeugs in alle 6 Freiheitsgrade (3 translatorische und 3 rotatorische Freiheitsgrade) innerhalb des Bewegungsraumes ermöglichen.

Bis auf wenige Ausnahmen sind die hydraulisch oder elektromechanisch angetriebenen Bewegungssysteme als Parallelroboter aufgebaut, von denen wiederum die Anordnung als Hexapod oder Stewart-Gough-Plattform am weitaus häufigsten anzutreffen sind. Das Bewegungssystem weist in der Regel längenveränderbare Aktuatoren auf, welche eine an den Aktuatoren angeordnete Plattform gegenüber einer festen Referenzebene durch eine entsprechende Längenänderung der Aktuatoren bewegen können. Die Aktuatoren sind hierfür sowohl an der Referenzebene als auch an der Plattform gelenkig angeordnet, so dass bei einer Längenänderung der Aktuatoren und damit einhergehenden Bewegung der Plattform auch eine Winkelveränderung zwischen Referenzebene und Aktuator bzw. zwischen Aktuator und Plattform möglich wird.

Die durch die Modellierung des Fahrzeuges in der Simulation gewonnenen Bewegungs- und/oder Beschleunigungswerte werden in dem Bewegungsraum des Bewegungssystems abgebildet. Dabei werden die hochfrequenten Anteile der Translationsbeschleunigungen sowie die hochfrequenten Anteile der Rotationsgeschwindigkeiten direkt in den entsprechenden Freiheitsgraden nachvollzogen. Die niederfrequenten Anteile der Translationsbeschleunigung werden dagegen durch das Kippen der Bewegungsplattform dargestellt, wodurch sich der Scheingewichtsvektor in der Simulatorkabine dreht. Die übrigen, dem Benutzer zur Verfügung stehenden Lagedarstellungen, die Außenansicht oder Instrumente beschreiben weiterhin die ursprüngliche Lage, so dass der Eindruck einer langanhaltenden, translatorischen Beschleunigung entsteht.

Nach derzeitigem Stand der Technik werden die aus der Simulation gewonnenen Bewegungs- und/oder Beschleunigungswerte direkt in eine Vorwärtskinematik der Plattform durch Längenänderung der Aktuatoren umgesetzt, was einer Steuerung ohne Rückmeldung des Systemzustandes entspricht. Für eine Rückmeldung muss jedoch der Systemzustand des Bewegungssystems in einer solchen reichen Art und Güte ermittelt werden, dass auch bei den verschiedenen zu simulierenden Werten eine Regelung ermöglicht wird. So beschreibt die DE 10 2012 103 870 A1 beispielsweise ein Verfahren, mit dem der Bewegungssystemzustand eines Bewegungssystems in Echtzeit erfasst werden kann, so dass grundsätzlich eine Regelung möglich wird.

Neben dem aktuellen Bewegungssystemzustand des Bewegungssystems ist es für eine Regelung ebenfalls notwendig zu wissen, welcher noch zur Verfügung stehende Bewegungsraum, ausgehend von dem aktuellen Bewegungssystemzustand, dem Bewegungssystem noch zur Verfügung steht, um die Bewegungs- und/oder Beschleunigungswerte entsprechend simulieren zu können. Denn grundsätzlich kann der Simulator aufgrund seiner mechanischen Bauweise entsprechende Bewegungs- und/oder Beschleunigungswerte nur innerhalb seiner mechanischen Grenze abbilden, so dass das System "Simulator" bezüglich der zu simulierenden Werte immer auf diese mechanische Systemgrenze begrenzt ist.

Allerdings ist eine allgemeingültige Beschreibung des Arbeitsraumes einer parallelen Roboterstruktur aufgrund der mathematisch mehrdeutigen Lösung der Vorwärtskinematik nicht möglich. Aus Sunjoo K. Advani, "The Kinematic Design of Flight Simulator Motion-Bases", Proefschrift ter verkjging van den grad van doctor, TU Delft, 1998, ist ein für alle Freiheitsgrade gültiger Algorithmus zur iterativen Bestimmung der Systemgrenzen und deren annäherungsweisen Beschreibung mittels mathematisch einfach zu definierende Hypoboliden bekannt. Hierbei wird der bewegliche Oberrahmen des Simulators virtuell so lange in eine Richtung verschoben, bis die über die Rückwärtskinematik bestimmte Länge eines der sechs Aktuatoren die mechanischen Systemgrenzen verletzt.

Ein solches iteratives, nicht deterministisches Verfahren zur Bestimmung der Systemgrenzen hat allerdings den entscheidenden Nachteil, dass es grundsätzlich nicht echtzeitfähig ist, da nicht vorhergesagt werden kann, wann das iterative nicht deterministische Berechnungsverfahren zu einem Ergebnis kommt. Für eine grundsätzlich echtzeitfähige Regelung eines Simulators ist es jedoch entscheidend, dass innerhalb des definierten Zeitschrittes für die Regelung die in diesem Zeitschritt für die Regelung benötigte Bewegungsraumgrenze bekannt ist, da ansonsten eine echtzeitfähige Regelung des Simulators nicht mehr möglich wäre. Dies kann das iterative, nicht deterministische Verfahren nicht liefern.

Aus der CA 2 744 444 A1 wird die Ansteuerung eines Hexapod-Simulators mithilfe eines Wash-Out-Filters beschrieben. Dabei wird vorgeschlagen, den zur Verfügung stehenden Bewegungsraum hinsichtlich eines einzigen Freiheitsgrades zu bestimmen, in dem die Plattform nur in dem betrachteten Freiheitsgrad iterativ bewegt wird, während die restlichen Freiheitsgrade fixiert sind. Anschließend wird die Plattform schrittweise entlang des Freiheitsgrades bewegt, bis einer der Aktuatoren seine extremale Auslenkung (vollständig ausgefahren oder vollständig eingefahren) erreicht hat. Ein solches iteratives Verfahren ist jedoch nicht deterministisch und somit nicht echtzeitfähig im Sinne einer Simulatorsteuerung.

Es ist daher Aufgabe der vorliegenden Erfindung ein verbessertes Verfahren zum Ermitteln einer Bewegungsgrenze eines Bewegungssystems anzugeben, mit dem die Bewegungsgrenze deterministisch und in Echtzeit berechnet werden kann, um so eine grundsätzlich echtzeitfähige Regelung unter Berücksichtigung der zur Verfügung stehenden Bewegungsgrenze innerhalb eines Simulators einrichten zu können.

Die Aufgabe wird mit dem Verfahren gemäß Anspruch 1, dem Computerprogrammprodukt gemäß Anspruch 8 sowie der Vorrichtung gemäß Anspruch 9 erfindungsgemäß gelöst.

Gemäß Anspruch 1 ist demnach ein Verfahren zum Ermitteln einer Bewegungsgrenze eines Bewegungssystems vorgesehen, wobei das Bewegungssystem eine mittels Aktuatoren gegenüber einer festen Referenzebene in mehreren Freiheitsgraden bewegbare Plattform aufweist. Die Aktuatoren sind dabei sowohl an der festen Referenzebene als auch an der bewegbaren Plattform gelenkig angeordnet, so dass jeder Aktuator einen unteren und einen oberen Gelenkpunkt aufweist. Die Aktuatoren sind dabei zur Längenänderung ausgebildet, wodurch aufgrund einer entsprechenden Längenänderung der Aktuatoren die Plattform vorzugsweise in die drei translatorischen und drei rotatorischen Freiheitsgrade bewegbar ist.

Zunächst wird ein Freiheitsgrad des Bewegungssystems, für den die Bewegungsgrenze ermittelt werden soll, festgelegt. Die Festlegung des Freiheitsgrades kann dabei auch automatisch erfolgen, wenn beispielsweise die übergeordnete Regelung des Simulators eine entsprechende Anfrage zur Ermittlung der Bewegungsgrenze des Bewegungssystems stellt. Darüber hinaus wird der aktuelle Bewegungssystemzustand des Bewegungssystems in Bezug auf ein vorgegebenes Koordinatensystem bereitgestellt, so dass ausgehend von dem aktuellen Zustand des Bewegungssystems dennoch verbleibende mögliche Bewegungsraum hinsichtlich des einen festgelegten Freiheitsgrades ermittelt werden kann. Anschließend wird für jeden oberen Gelenkpunkt der Aktuatoren, also jene Punkte, an denen die Aktuatoren an der oberen Plattform gelenkig angeordnet sind, eine Gelenktrajektorie ermittelt, entlang derer der obere Gelenkpunkt sich beim Bewegen der Plattform in Richtung des festgelegten Freiheitsgrades bewegen würde. Die Gelenktrajektorie bezeichnet somit die Bewegung des jeweiligen oberen Gelenkpunktes entlang des einen festgelegten Freiheitsgrades.

Bei der Berechnung der Gelenktrajektorie wird der aktuelle Bewegungssystemzustand im vorgegebenen Koordinatensystem mit berücksichtigt, so dass die Gelenktrajektorie hinsichtlich Lage und Position im vorgegebenen Koordinatensystem referenziert.

Im nächsten Schritt wird die maximal mögliche Position jedes oberen Gelenkpunktes auf seiner berechneten Gelenktrajektorie in Richtung des festgelegten Freiheitsgrades berechnet, und zwar in Abhängigkeit von einer extremalen Auslenkung des entsprechenden Aktuators des jeweiligen oberen Gelenkpunktes. Denn aufgrund der mechanischen Begrenzung des Aktuators bezüglich seiner extremalen Auslenkung (d.h. seine maximale oder minimale Länge, die der Aktuator aufgrund seiner mechanischen Grenze erreichen kann) kann der obere Gelenkpunkt nicht jede Position auf der Gelenktrajektorie erreichen, ohne die mechanischen Systemgrenzen des Bewegungssystems zu verletzen. Da der Aktuator jedoch auch an dem unteren Gelenkpunkt in Bezug auf das vorgegebene Koordinatensystem ortsfest und gelenkig angeordnet ist, ist sein Bewegungsraum grundsätzlich beschränkt. Ein Schnittpunkt dieses Bewegungsraumes mit der Gelenktrajektorie des diesem Aktuators zugeordneten oberen Gelenkpunktes ergibt dabei eine maximale Position, die der Aktuator in seiner extremalen Auslenkung auf dieser Gelenktrajektorie anfahren kann.

Anschließend wird die Bewegungsgrenze des Bewegungssystems in Bezug auf den festgelegten Freiheitsgrad in Abhängigkeit von den maximalen möglichen Positionen der oberen Gelenkpunkte auf ihren Gelenktrajektorien berechnet, vorzugsweise derart, dass die kleinste maximale Position auf der jeweiligen Gelenktrajektorie die Bewegungsgrenze darstellt.

**EP 3 023 205 B1**

Da die oberen Gelenkpunkte sowohl der Bewegung entlang des Freiheitsgrades als auch der extremalen Entfernung zum unteren Gelenkpunkt entsprechen müssen, ergeben sich die Extrempositionen eines jeden Gelenkpunktes aus dem Schnittpunkt beider Linien. Die Extremposition des Gesamtsystems wird dann durch die erste Extremposition von der aktuellen Position aus betrachtet festgelegt. Damit wird die Bewegungsgrenze, ausgehend von dem aktuellen Bewegungssystemzustand deterministisch und eindeutig berechenbar, so dass ein derartiges System grundsätzlich echtzeitfähig ist. Es kann daher als Grundlage für eine Regelung einer Bewegung eines Simulators verwendet werden.

Die Freiheitsgrade des Bewegungssystems können die translatorischen oder rotatorischen Freiheitsgrade, insbesondere die drei translatorischen und die drei rotatorischen Freiheitsgrade, ganz besonders vorteilhaft aus Mischformen hiervon sein, beispielsweise elliptische Bewegungsbahnen.

Der aktuelle Bewegungssystemzustand kann beispielsweise mit Hilfe von Sensoren erfasst und dann entsprechend bereitgestellt werden.

Gemäß einer vorteilhaften Ausführungsform ist der Bewegungssystemzustand die Lage und/oder Position der Plattform bezüglich des vorgegebenen Koordinatensystems. Die Lage der Plattform bezüglich des vorgegebenen Koordinatensystems bezeichnet dabei die Lage der durch die Plattform definierten Ebene innerhalb des vorgegebenen Koordinatensystems, während die Position der Plattform die Position im vorgegebenen Koordinatensystem referenziert auf einen Referenzpunkt der Plattform bezeichnet. Der Referenzpunkt der Plattform kann beispielsweise der Mittelpunkt der Plattform darstellen.

Der Bewegungssystemzustand kann in einer weiteren vorteilhaften Ausführungsform auch die Lage, Position und/oder Auslenkung der Aktuatoren bezüglich des vorgegebenen Koordinatensystems sein. Dabei sind die Lage, Position und/oder Auslenkung der Aktuatoren äquivalent zu der Lage und/oder Position der Plattform bezüglich des vorgegebenen Koordinatensystems, so dass beide Werte für den Bewegungssystemzustand ineinander überführbar sind (beispielsweise mit Hilfe der aus der Robotik bekannten Vorwärts- bzw. Rückwärtskinematik).

Erfindungsgemäß wird die maximal mögliche Position eines oberen Gelenkpunktes auf seiner berechneten Gelenktrajektorie in Richtung des festgelegten Freiheitsgrades berechnet, indem ein Bewegungsraum des jeweiligen Aktuators in Bezug auf seine extremale Auslenkung bei einer Bewegung des Aktuators um den unteren Gelenkpunkt an der festen Referenzebene und anschließend dann der Schnittpunkt der berechneten Gelenktrajektorie des jeweiligen oberen Gelenkpunktes mit dem Bewegungsraum des Aktuators berechnet. Hierbei kann beispielsweise der jeweilige Aktuator zusammen mit seiner Gelenktrajektorie in einer 2D-Ebene betrachtet werden, die in der Ebene des jeweiligen gesuchten Freiheitsgrades liegt. Die Gelenktrajektorie des oberen Gelenkpunktes bezeichnet dabei eine Strecke, entlang derer der obere Gelenkpunkt in Richtung des gesuchten Freiheitsgrades in der Ebene verschoben werden kann. Der maximale Bewegungsraum des zu dem oberen Gelenkpunkt gehörenden Aktuators ist dann in der 2D-Ebene eine Kreisbahn, um die der Aktuator um den unteren Gelenkpunkt an der ortsfesten Referenzebene in seiner extremalen Auslenkung bewegt werden kann. Der oberste bzw. unterste Schnittpunkt der Kreisbahn (Bewegungsraum des Aktuators) mit der Gelenktrajektorie in Form einer Strecke bezeichnet dann die maximale Position des oberen Gelenkpunktes. Die maximale Position des oberen Gelenkpunktes bezeichnet dabei insbesondere diejenige Position des oberen Gelenkpunktes auf der Gelenktrajektorie, die der obere Gelenkpunkt bei einer extremalen Auslenkung des Aktuators erreichen kann, mithin also bei einer minimalen Auslenkung des Aktuators (kleinstmögliche Länge) oder einer maximalen Auslenkung (größtmögliche Länge des Aktuators).

Der Erfinder hat hierbei erkannt, dass bei Betrachtung nur eines einzigen Freiheitsgrades zur Berechnung der Bewegungsraumgrenze des Bewegungssystems das Problem auf eine mathematisch eindeutige Lösung heruntergebrochen werden kann, da nunmehr lediglich das Bewegungssystem und seine möglichen Bewegungsgrade, unter Berücksichtigung des aktuellen Bewegungssystemzustandes lediglich in einer 2D-Ebene betrachtet werden muss. Dies führt, wie später noch gezeigt, zu einer eindeutigen Berechnung.

In einer weiteren vorteilhaften Ausführungsform lässt sich auf Basis der ermittelten Bewegungsgrenze in Richtung eines Freiheitsgrades ein maximaler Bewegungsraum des Bewegungssystems, ausgehend von dem aktuellen Bewegungssystemzustand, ermitteln. Hierfür wird zunächst die Bewegungsgrenze in einem Freiheitsgrad ermittelt, so dass beispielsweise zwei maximale Grenzen in jeweils diametral gegenüberliegende Richtungen des jeweiligen Freiheitsgrades ermittelt worden sind. Basierend hierauf wird nun für verschiedene Werte dieses zuvor berechneten Freiheitsgrades jeweils die Bewegungsgrenze auf Basis dieses angenommenen Wertes des zuvor berechneten Freiheitsgrades berechnet, so dass sich für verschiedene Werte des zuerst berechneten Freiheitsgrades verschiedene Bewegungsgrenzen für den zweiten berechneten Freiheitsgrad ergeben. In Summe ergibt sich dann ein möglicher Bewegungsraum, in dem sich die Bewegungsplattform, ausgehend von dem aktuellen Bewegungssystemzustand in den ersten und zweiten Freiheitsgrad bewegen kann.

Vorteilhafterweise handelt es sich bei dem Bewegungssystem um eine Stewart-Gough-Plattform mit vorzugsweise sechs Aktuatoren. Denkbar sind allerdings auch andere Bewegungssysteme.

Die Aufgabe wird im Übrigen auch mit die Verfahren gemäß Ansprüche 1 und 10 sowie Computerprogrammprodukten gemäß Ansprüche 8 und 11 und Vorrichtungen gemäß Ansprüche 9, 12 und 13 gelöst.

4

Dennoch wird zur Ansteuerung des Bewegungssystems der aktuelle Zustand mittels Sensoren ermittelt. Anschließend werden Steuersignale generiert, die zur Ansteuerung der Aktuatoren dienen. Die Steuersignale werden dabei auch anhand von Bewegungsgrenzen ermittelt, die sich aus dem oben genannten Verfahren ergeben.

Die Steuervorrichtung kann beispielsweise Bestandteil eines Simulators mit Bewegungssystem und Steuervorrichtung sein.

Die Erfindung wird anhand der beigefügten Figuren beispielhaft erläutert. Es zeigen:

| | |
|---|---|
| Figur 1a - | Nomenklatur des zweidimensionalen Ersatzmodels; |
| Figur 1b - | Beispielhafte Bestimmung der Bewegungsgrenze; |
| Figur 2 - | Nomenklatur einer Stewart-Gough-Plattform; |
| Figur 3 - | Nomenklatur der für die Berechnung benötigten Vektoren; |
| Figur 4 - | Darstellung eines zweidimensionalen Bewegungsraums. |

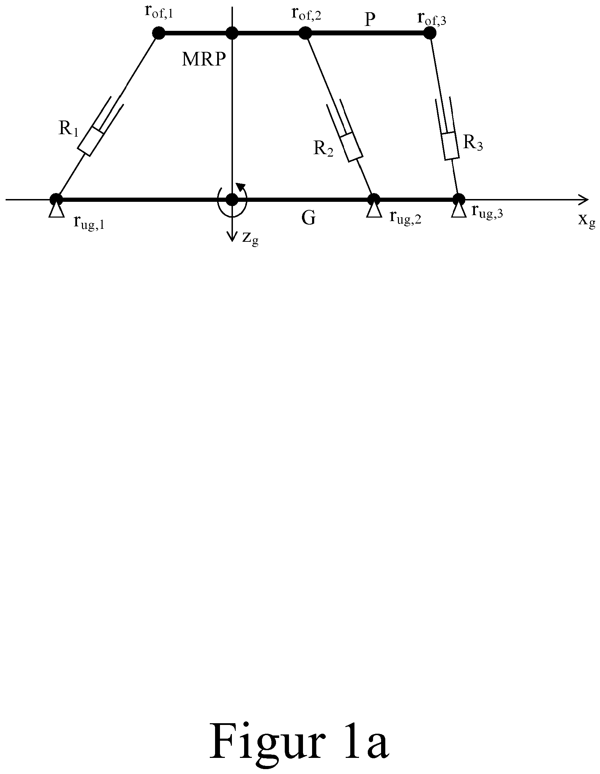

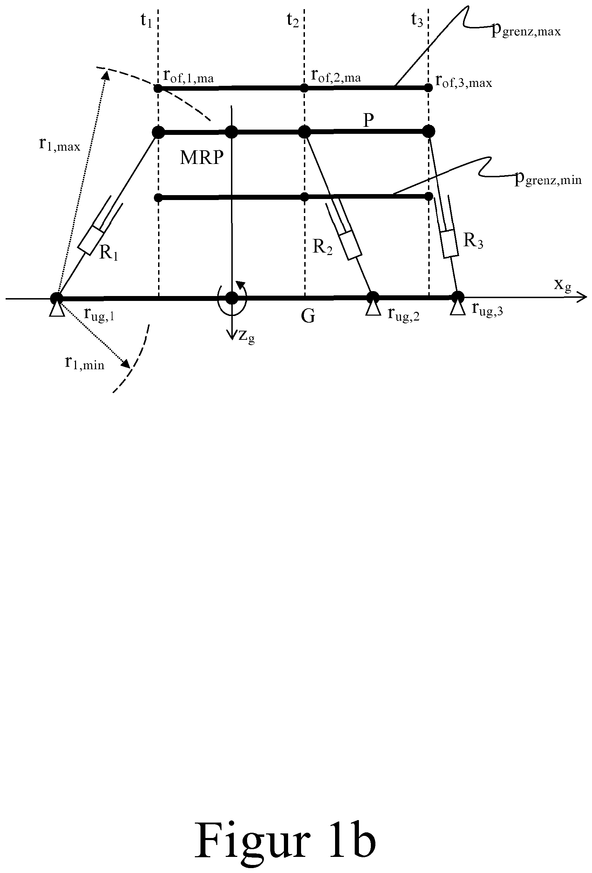

Figur 1 zeigt die Nomenklatur des zweidimensionalen Ersatzmodels basierend auf drei Aktuatoren. Das Model besteht aus einem Gestell G (Unterrahmen), das ortsfest ist und die Referenzebene darstellt. Über drei Aktuatoren $R_1$, $R_2$ und $R_3$ ist eine bewegbare Plattform P (Oberrahmen) angekoppelt, die mittels einer Längenänderung der drei Getriebeglieder (Aktuatoren) $R_1$, $R_2$ und $R_3$ in drei Freiheitsgrade bewegt werden kann. Diese drei Freiheitsgrade sind die beiden translatorischen Freiheitsgrade x und z sowie der Drehwinkel Theta. Die Getriebeglieder $R_1$, $R_2$ und $R_3$ sind jeweils als Schubhülsen klassifizierbar, deren Längen innerhalb der vorgegeben Grenzen verändert werden können.

Die jeweiligen Gelenkpunkte werden mit einem kleinen "r" bezeichnet. Die unteren Gelenkpunkte an dem Gestell G weisen dabei den Index "u" auf, der den Gelenkpunkt als unteren Gelenkpunkt des jeweiligen indizierten Aktuators definiert. Die oberen Gelenkpunkte weisen dementsprechend ein kleines "o" auf, wodurch der Gelenkpunkt als an der Plattform P vorgesehener Gelenkpunkt des jeweiligen Aktuators bezeichnet wird. Durch die Indizes "g" und "f" wird das jeweilige Koordinatensystem definiert, das jedoch in sich jeweils um rechenbar ist. So meint der Index "g" das ortsfeste Koordinatensystem des Gestells, während der Index "f" das fahrzeugseitige Koordinatensystem bezogen auf die bewegbare Plattform P bezeichnet.

So bezeichnet der Gelenkpunk $r_{ug,1}$ den unteren Gelenkpunkt des Aktuators $R_1$ während der Gelenkpunkt $r_{of,1}$ den oberen Gelenkpunkt des Aktuators $R_1$ an der Plattform P bezeichnet. Die übrigen Bezeichnungen für die Gelenkpunkte ergeben sich dann entsprechend.

Figur 1b zeigt beispielhaft die Bestimmung der Bewegungsgrenze in Bezug auf einen translatorischen Freiheitsgrad. Im Ausführungsbeispiel der Figur 1b wird der translatorische Freiheitsgrad in Z-Richtung untersucht, d.h. derjenige Freiheitsgrad bei dem ausgehend vom aktuellen Bewegungssystemzustand die Plattform P nach oben bzw. nach unten verfahren wird. Die übrigen Freiheitsgrade, im Ersatzmodel der Figur 1b bezeichnet durch x und den Drehwinkel Theta, bleiben indes unverändert.

Entlang des gewählten Freiheitsgrades wird nun für jeden oberen Gelenkpunkt $r_{of,1}$ bis $r_{of,3}$ eine jeweilige Gelenktrajektorie $t_1$ bis $t_3$ berechnet, die sich aus dem aktuellen Zustand des jeweiligen oberen Gelenkpunktes entlang des gesuchten Freiheitsgrades ergibt. Mit anderen Worten, die Gelenktrajektorien $t_1$ bis $t_3$ der jeweiligen oberen Gelenkpunkte $r_{of,1}$ bis $r_{of,3}$ ergeben sich aus dem gesuchten Freiheitsgrad in Z-Richtung, basierend auf der aktuellen Position der oberen Gelenkpunkte in Bezug auf das feste Koordinatensystem des Gestells G.

Die Gelenktrajektorien $t_1$ bis $t_3$ bezeichnen dabei diejenige Strecke, entlang derer die jeweiligen Gelenkpunkte sich bewegen, wenn die Plattform P in dem gesuchten Freiheitsgrad in Z-Richtung verfahren wird. Die oberen Gelenkpunkte können dabei nur Positionen auf der jeweiligen Gelenktrajektorie $t_1$ bis $t_3$ annehmen, wenn die Plattform P entlang des gewählten Freiheitsgrades in Z-Richtung bewegt wird. Andere Positionen außerhalb der Gelenktrajektorie sind in dem Ersatzmodel nicht möglich.

Im nächsten Schritt wird für jeden Aktuator ein Bewegungsraum bezüglich einer extremalen Auslenkung berechnet. In Figur 1b soll dies anhand des Aktuators $R_1$ kurz erläutert werden. Der Aktuator $R_1$ kann dabei insgesamt zwei extremale Auslenkungen erreichen, nämlich eine maximale Auslenkung, bei der der Aktuator $R_1$ seine maximale Länge hat, und eine minimale Auslenkung bei der der Aktuator $R_1$ die kürzeste Länge aufweist.

Aufgrund der Tatsache, dass der Aktuator $R_1$ an dem unteren Gelenkpunkt $r_{ug,1}$ gelenkig angeordnet ist, ergeben sich für die beiden extremalen Auslenkungen des Aktuators $R_1$ insgesamt zwei Bewegungsräume, auf denen der Aktuator $R_1$ in seiner jeweiligen maximalen Auslenkung liegen kann. Der Bewegungsraum beschreibt dabei im 2D-Ersatzmodel eine Kreisbahn. Für die extremale Auslenkung wird daher ein kreisförmiger Bewegungsraum $B_{max}$ definiert, während bei einer minimalen Auslenkung der Bewegungsraum $B_{min}$ definiert wird. Der kreisförmige Bewegungsraum $B_{max}$ hat dabei einen Radius $r_{1,max}$, der der maximalen Auslenkung des Aktuators $R_1$ entspricht. Der Bewegungsraum $B_{min}$ hat einen Radius $r_{1,min}$, der der minimalen Länge des Aktuators entspricht.

Der Schnittpunkt des maximalen Bewegungsraums $B_{max}$ des Aktuators $R_1$ mit der Gelenktrajektorie $t_1$ ergibt dabei die maximale Position entlang des gesuchten Freiheitsgrades z, der der Aktuator auf der Gelenktrajektorie $t_1$

anfahren kann. Nach unten hin gibt es aufgrund des fehlenden Schnittpunktes des Bewegungsraumes $B_{min}$ mit der Trajektorie $t_1$ innerhalb der Systemgrenzen keine Einschränkung. Wird die maximale Auslenkung gesucht, so ist die maximale Position bezüglich der Gelenktrajektorie $t_1$ der Schnittpunkt mit $B_{max}$, was als $r_{of,1,max}$ bezeichnet wird.

Die übrigen Aktuatoren $R_2$, $R_3$ werden in ähnlicher Weise verrechnet, so dass sich auch hier bezüglich ihrer jeweiligen Gelenktrajektorien $t_2$, $t_3$ Schnittpunkte mit ihren jeweiligen Bewegungsräumen ergibt. Sowohl der Aktuator $R_2$ als auch der Aktuator $R_3$ haben dabei Schnittpunkte mit ihren jeweiligen Gelenktrajektorien, die oberhalb der maximal möglichen Position des Aktuators $R_1$ liegen. Damit wird die Systemgrenze bezüglich des gesuchten Freiheitsgrades auf diejenige maximale Position gesetzt, die in Bezug auf den gesuchten Freiheitsgrad den kleinsten gemeinsamen Nenner darstellt. Im Falle des Ausführungsbeispiels der Figur 1b ist dies die Position $r_{of,1,max}$, da dies die kleinste maximale Position aller Aktuatoren mit ihren jeweiligen Gelenktrajektorien darstellt.

Damit ist die Bewegungsgrenze in Bezug auf den gesuchten Freiheitsgrad die maximale Position des Aktuators $R_1$, so dass die Plattform P maximal bis zu der Grenze $P_{grenz,max}$ verfahrbar ist. In korrespondierender Art und Weise ergibt sich für die minimale Auslenkung somit die Bewegungsgrenze $P_{grenz,min}$ bei der der Aktuator $R_2$ den begrenzenden Faktor darstellt.

Wird anstelle eines translatorischen Freiheitsgrades ein rotatorischer Freiheitsgrad gesucht, beispielsweise um den Drehwinkel Theta, so ergeben sich keine geraden Gelenktrajektorien, sondern kreisförmige Trajektorien, die dann nach dem gleichen Prinzip wie in Figur 1b gezeigt verrechnet werden. Hierbei ist es auch denkbar, mehrere Freiheitsgrade ineinander zu rechnen, und so beispielsweise ellipsoide Gelenktrajektorien oder Gelenktrajektorien in Form von Klothoiden zu ermöglichen.

Werden diese Zusammenhänge mathematisch beschrieben, erhält man für jeden Aktuator $R_1$ bis $R_3$ eine quadratische Gleichung mit einer realen, zweirealen oder zwei konjugiert-komplexen Lösungen. Im ersten Fall befindet sich der Aktuator bereits in einer Extremlage, im zweiten Fall ist eine der Positionen durch den Aktuator nicht anfahrbar, außer im Schadensfall, was im praktischen Betrieb ausgeschlossen werden kann. Im dritten Fall beschränken die Bewegungen des Aktuators den betrachteten Freiheitsgrad nicht.

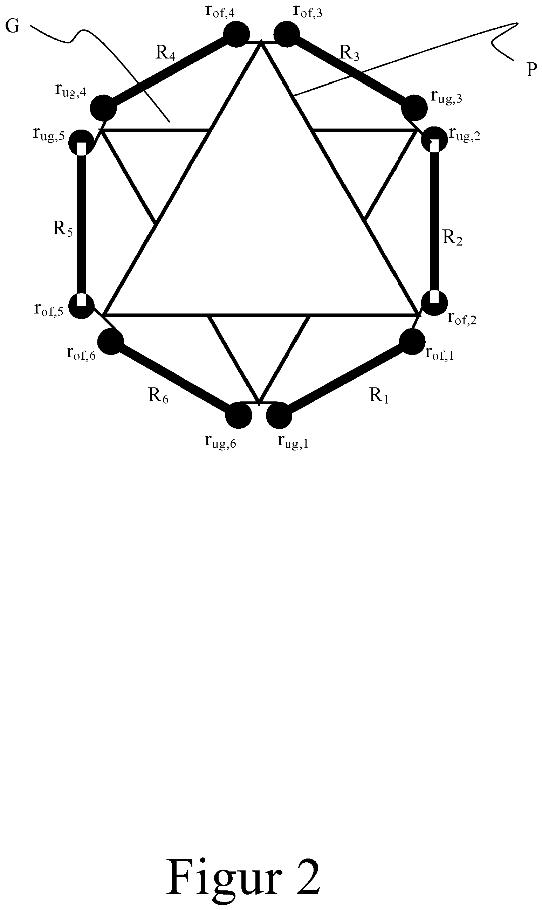

Figur 2 zeigt eine Gesamtdraufsicht einer Steward-Gough-Plattform in ihrer verwendeten Nomenklatur. Für die mathematische Bestreitung der Steward-Gough-Plattform wird ein Hexapod verwendet, der wiederum als Getriebe angesehen werden kann. Dieses zerfällt in das Gestell G als Verbindungsglied der unteren Gelenkpunkte, in die Plattform P als Oberrahmen für die Aufnahme der oberen Gelenkpunkte sowie den sechs Aktuatoren $R_1$ bis $R_6$ als Getriebeglieder.

Das Gestell G ist fest mit dem Ursprung des geodätischen Koordinatensystems verbunden. Für den im Folgenden dargestellten Falls eines rotationssymmetrischen Aufbaus liegen diese im Mittelpunkt eines Dreiecks gebildet aus den Mittelpunkten der Strecken zwischen dreipaarweise angeordneten, unteren Gelenkpunkten. Alle Gelenkpunkte liegen somit auf einem Kreis, dessen Mittelpunkt mit dem Ursprung des geodätischen Koordinatensystems zusammenfällt. Diese Annahmen werden ausschließlich für das bessere Verständnis gemacht und können ohne Einschränkung der Allgemeingültigkeit für die folgenden Ausführungen im Fall asymmetrischer Anordnung fallengelassen werden.

Des Weiteren ist das Dreieck so angeordnet, dass die Spitze in Bezug auf die später einzuführende Flugrichtung nach hinten zeigt. Die X-Achse des geodätischen Koordinatensystems weist in Flugrichtung, die Y-Achse in Flugrichtung gesehen nach rechts und die Z-Achse gemäß Definition nach unten. Die Bezeichnung der unteren Gelenkpunkte erfolgt von der hinteren Spitze des Dreiecks aus gegen den Uhrzeigersinn. Die unteren Gelenkpunkte erhalten die Bezeichnung "r" und die Indizes "u" als Bezeichnung der unteren Gelenkpunkte. Mit dem Index "g" wird angegeben, dass der Gelenkpunkt als im geodätischen Koordinatensystem beschrieben angesehen wird.

Die Bezeichnung der mit der Plattform P verbundenen Gelenkpunkte erfolgt analog dazu mit "r", ergänzt um die Indizes "o" für obere Gelenkpunkte sowie "f" für die Darstellung im flugzeugfesten Koordinatensystem. Selbstverständlich können diese Koordinatensysteme entsprechend transformiert werden.

Im plattformfesten Koordinatensystem ist die X-Achse wiederum in Flugrichtung angeordnet, die Y-Achse weist in Flugrichtung nach rechts und die Z-Achse nach unten. Der Ursprung des plattformfesten Koordinatensystems liegt im Mittelpunkt des Plattformdreiecks P und wird im Folgenden als Motion-Reference (MRP) bezeichnet.

Werden nun die unteren Gelenkpunkte mit den jeweils oberen Gelenkpunkten verbunden, so ergeben sich die entsprechenden Aktuatoren $R_1$ bis $R_6$. Figur zeigt die entsprechende Nomenklatur hierfür.

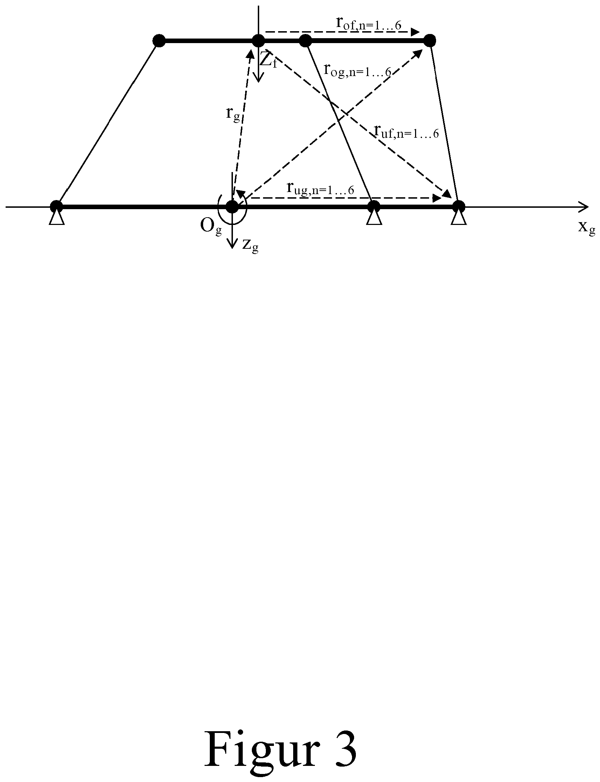

Figur 3 zeigt die Nomenklatur der für die Berechnung benötigten Vektoren. Aus der Kinematik von Robotern sind die beiden Probleme der Vorwärts- und der Rückwärtskinematik bekannt. Unter der Rückwärts- oder auch Inverskinematik wird im Sinne der vorliegenden Erfindung die Ermittlung der Position, Geschwindigkeit und Beschleunigung aufgrund der Länge, Ausfahrgeschwindigkeit und Ausfahrbeschleunigung der Aktuatoren verstanden. Demgegenüber wird durch die Vorwärtskinematik die Bestimmung der Position, Länge, Ausfahrgeschwindigkeit und -beschleunigung bei bekannter Position, Geschwindigkeit und Beschleunigung der Plattform verstanden.

Für die Vorwärtskinematik ergeben sich nun die Vektoren der Aktuatoren bei bekannter Lage der Plattform P.

$$\vec{r}_{n=1\ldots6} = \vec{r}_g + \vec{r}_{ofg,n=1\ldots6} - \vec{r}_{ug,n=1\ldots6} = \vec{r}_g + \overline{\overline{M}}_{gf} \cdot \vec{r}_{of,n=1\ldots6} - \vec{r}_{ug,n=1\ldots6}$$

<div align="right">1-1</div>

Mit der Transformationsmatrix

$$\overline{\overline{M}}_{gf} = \begin{bmatrix} \cos\Theta\cdot\cos\Psi & \sin\Phi\cdot\sin\Theta\cdot\cos\Psi - \cos\Phi\cdot\sin\Psi & \cos\Phi\cdot\sin\Theta\cdot\cos\Psi + \sin\Phi\cdot\sin\Psi \\ \cos\Theta\cdot\sin\Psi & \sin\Phi\cdot\sin\Theta\cdot\sin\Psi + \cos\Phi\cdot\cos\Psi & \cos\Phi\cdot\sin\Theta\cdot\sin\Psi - \sin\Phi\cdot\cos\Psi \\ -\sin\Theta & \sin\Phi\cdot\cos\Theta & \cos\Phi\cdot\cos\Theta \end{bmatrix}$$

<div align="right">1-2</div>

damit ist die gesuchte Länge der Aktuatoren

$$l^2_{n=1\ldots6} = r^2_{x,n=1\ldots6} + r^2_{y,n=1\ldots6} + r^2_{z,n=1\ldots6}$$
$$\Leftrightarrow l_{n=1\ldots6} = \sqrt{r^2_{x,n=1\ldots6} + r^2_{y,n=1\ldots6} + r^2_{z,n=1\ldots6}}$$

<div align="right">1-3</div>

Der Vektor vom Ursprung des flugzeugfesten Koordinatensystems zu den unteren Gelenkpunkten ist dann analog

$$\vec{r}_{uf,n=1\ldots6} = \overline{\overline{M}}_{fg} \cdot \left(\vec{r}_g - \vec{r}_{ug,n=1\ldots6}\right) = \overline{\overline{M}}^T_{gf} \cdot \left(\vec{r}_g - \vec{r}_{ug,n=1\ldots6}\right)$$
$$\vec{r}_{ufg,n=1\ldots6} = \vec{r}_g - \vec{r}_{ug,n=1\ldots6} = \vec{r}_g - \vec{r}_{ug,n=1\ldots6}$$

<div align="right">1-4</div>

Für die Rückwärtskinematik führen die Gleichungen (1-1) und (1-3) auf ein inhomogenes Gleichungssystem mit 24 Gleichungen und 24 Unbekannten, welches bis zu über 40 Lösungen haben kann. Aus diesem Grund ist die Position der Plattform bei gegebener Aktuatorlänge nur über iterative Verfahren möglich, die ein nicht-deterministisches Laufverhalten aufweisen. Aufgrund der hohen Anzahl an Lösungen ist es daher nicht möglich den Bewegungsraum durch Einsetzen der Extremwerte für die Aktuatorlänge analytisch zu bestimmen.

Im Folgenden wird daher davon ausgegangen, dass immer nur ein Freiheitsgrad angeregt wird. Hierbei wird der betrachtete Aktuator bewegt. Es wird davon ausgegangen, dass alle anderen Aktuatoren die Bewegung in dem betrachteten Freiheitsgrad ermöglichen können. Auf diese Weise erhält man für jeden der sechs Aktuatoren 24 Extremwerte. Der Aktuator mit dem betragsmäßig kleinsten Extremwert legt dann die Begrenzung der Plattform in diesem Freiheitsgrad fest.

Eine weitere Annahme ist die Transformierbarkeit aller Vektoren in das betrachtete Koordinatensystem. Dies setzt die Kenntnis der Lage dieses Koordinatensystems voraus. Die oberen Gleichungen werden zu diesem Zweck aufgelöst:

$$\vec{r}_{n=1\ldots6} = \vec{r}_g + \vec{r}_{og} - \vec{r}_{ug} = \vec{r}_g + \overline{\overline{M}}_{gf} \cdot \vec{r}_{of} - \vec{r}_{ug}$$
$$\Leftrightarrow \vec{r}_{n=1\ldots6} - \vec{r}_g + \vec{r}_{ug} = \overline{\overline{M}}_{gf} \cdot \vec{r}_{of} = \vec{r}_{ofg}$$

<div align="right">1-5</div>

mit

<div align="center">7</div>

$$\vec{r}_{ofg} = \overline{\overline{M}}_{gf} \cdot \vec{r}_{of}$$

$$= \begin{bmatrix} \cos\Theta \cdot \cos\Psi & \sin\Phi \cdot \sin\Theta \cdot \cos\Psi - \cos\Phi \cdot \sin\Psi & \cos\Phi \cdot \sin\Theta \cdot \cos\Psi + \sin\Phi \cdot \sin\Psi \\ \cos\Theta \cdot \sin\Psi & \sin\Phi \cdot \sin\Theta \cdot \sin\Psi + \cos\Phi \cdot \cos\Psi & \cos\Phi \cdot \sin\Theta \cdot \sin\Psi - \sin\Phi \cdot \cos\Psi \\ -\sin\Theta & \sin\Phi \cdot \cos\Theta & \cos\Phi \cdot \cos\Theta \end{bmatrix} \cdot \begin{pmatrix} r_{of,x} \\ r_{of,y} \\ r_{of,z} \end{pmatrix}$$

$$= \begin{pmatrix} (\cos\Theta \cdot \cos\Psi) \cdot r_{of,x} + (\sin\Phi \cdot \sin\Theta \cdot \cos\Psi - \cos\Phi \cdot \sin\Psi) \cdot r_{of,y} + (\cos\Phi \cdot \sin\Theta \cdot \cos\Psi + \sin\Phi \cdot \sin\Psi) \cdot r_{of,z} \\ (\cos\Theta \cdot \sin\Psi) \cdot r_{of,x} + (\sin\Phi \cdot \sin\Theta \cdot \sin\Psi + \cos\Phi \cdot \cos\Psi) \cdot r_{of,y} + (\cos\Phi \cdot \sin\Theta \cdot \sin\Psi - \sin\Phi \cdot \cos\Psi) \cdot r_{of,z} \\ (-\sin\Theta) \cdot r_{of,x} + (\sin\Phi \cdot \cos\Theta) \cdot r_{of,y} + (\cos\Phi \cdot \cos\Theta) \cdot r_{of,z} \end{pmatrix}$$

1-6

Anhand eines translatorischen Freiheitsgrades soll dies nun kurz skizziert werden.

Im Folgenden sei die Lage in den drei rotatorischen Freiheitsgraden bekannt und konstant. Die Transformationsmatrix vom körperfesten zum geodätischen Koordinatensystem und damit die Beschreibung der Plattformgelenkpunkte im geodätischen Koordinatensystem sind somit einfach möglich. Ebenso ist weiterhin die Lage der unteren Gelenkpunkte bekannt.

Allgemein ergibt sich nach Umwandlung aller Vektoren dann das gewünschte Koordinatensystem aus der Gleichung (1-1)

$$\vec{r}_{A,n=1...6} = \vec{r}_{g,A} + \vec{r}_{ofA,n=1...6} - \vec{r}_{ugA,n=1...6}$$
$$\Leftrightarrow \vec{r}_{A,n=1...6} - \vec{r}_{g,A} = \vec{r}_{ofA,n=1...6} - \vec{r}_{ugA,n=1...6}$$

1-7

und komponentenweise notiert

$$\begin{pmatrix} r_x - r_{gx} \\ r_y - r_{gy} \\ r_z - r_{gz} \end{pmatrix}_{A,n=1...6} = \begin{pmatrix} r_{ofx} \\ r_{ofy} \\ r_{ofz} \end{pmatrix}_{A,n=1...6} - \begin{pmatrix} r_{ugx} \\ r_{ugy} \\ r_{ugz} \end{pmatrix}_{A,n=1...6}$$

1-8

Hieraus ergibt sich ein Gleichungssystem mit drei Gleichungen und sechs unbekannten auf der linken Seite. Eine vierte Gleichung kommt durch den Zusammenhang für die Aktuatorlänge hinzu.

$$l_{n=1...6}^2 = r_{n=1...6,A,x}^2 + r_{n=1...6,A,y}^2 + r_{n=1...6,A,z}^2$$

1-9

Eine Lösung dieses Gleichungssystems ist nur mit zwei weiteren Einschränkungen in Bezug auf die bislang als unbekannt angenommene Größe möglich. Bei Betrachtung eines translatorischen Freiheitsgrades führt dies beispielsweise auf ein Gleichungssystem mit vier unbekannten Gleichungen.

Wird beispielsweise für eine beliebige Lage und Position der Plattform der maximal mögliche Weg in X-Richtung im geodätischen Koordinatensystem gesucht, so führt die Gleichung (1-1) zu

$$\vec{r}_{n=1...6} - \vec{r}_g = \overline{\overline{M}}_{gf} \cdot \vec{r}_{of,n=1...6} - \vec{r}_{ug,n=1...6}$$

1-10

Für die bekannten Größen werden die rechten Seiten der Gleichungen (1-8) mittels

$$a_{n=1...6} = \cos\Theta \cdot \cos\Psi \cdot r_{of,x,n=1...6} + \left(\sin\Phi \cdot \sin\Theta \cdot \cos\Psi - \cos\Phi \cdot \sin\Psi\right) \cdot r_{of,y,n=1...6} +$$
$$\left(\cos\Phi \cdot \sin\Theta \cdot \cos\Psi + \sin\Phi \cdot \sin\Psi\right) \cdot r_{of,z,n=1...6} - r_{ug,x,n=1...6}$$

$$c_{n=1...6} = \cos\Theta \cdot \sin\Psi \cdot r_{of,x,n=1...6} + \left(\sin\Phi \cdot \sin\Theta \cdot \sin\Psi + \cos\Phi \cdot \cos\Psi\right) \cdot r_{of,y,n=1...6} +$$
$$\left(\cos\Phi \cdot \sin\Theta \cdot \sin\Psi - \sin\Phi \cdot \cos\Psi\right) \cdot r_{of,z,n=1...6} - r_{ug,y,n=1...6}$$

$$e_{n=1...6} = -\sin\Theta \cdot r_{of,x,n=1...6} + \left(\sin\Phi \cdot \cos\Theta\right) \cdot r_{of,y,n=1...6} + \left(\cos\Phi \cdot \cos\Theta\right) \cdot r_{of,z,n=1...6} - r_{ug,z,n=1...6}$$

<div align="right">1-11</div>

zusammengefasst.

Für das Anschauungsbeispiel soll der Bewegungsraum in X-Richtung bestimmt werden, so dass die beiden anderen translatorischen Freiheitsgrade konstant auf dem Kantenwert gehalten werden. Damit ergibt sich für die Bewegung in X-Richtung

$$\vec{r}_{n=1...6} - \vec{r}_g = \overline{\overline{M}}_{gf} \cdot \vec{r}_{of} - \vec{r}_{ug}$$
$$\Leftrightarrow \begin{pmatrix} r_x - r_{gx} \\ r_y \\ r_z \end{pmatrix}_{n=1...6} = \begin{pmatrix} a \\ c \\ e \end{pmatrix}_{n=1...6} + \begin{pmatrix} b_x \\ d_x \\ f_x \end{pmatrix}$$

<div align="right">1-12</div>

mit

$$b_x = 0$$
$$d_x = r_{gy}$$
$$f_x = r_{gz}$$

<div align="right">1-13</div>

Damit ergibt sich mit Hilfe des Zusammenhangs für die Länge des Aktuators über

$$l_{n=1...6}^2 = r_{x,n=1...6}^2 + r_{y,n=1...6}^2 + r_{z,n=1...6}^2$$
$$= \left(a_{n=1...6} + b_x + r_{gx,n=1...6}\right)^2 + \left(c_{n=1...6} + d_x\right)^2 + \left(e_{n=1...6} + f_x\right)^2$$
$$= \left(a_{n=1...6} + r_{gx,n=1...6}\right)^2 + \left(c_{n=1...6} + d_x\right)^2 + \left(e_{n=1...6} + f_x\right)^2$$
$$\Leftrightarrow r_{gx,1/2,n=1...6} = -a_{n=1...6} \pm \sqrt{l_{n=1...6}^2 - \left(c_{n=1...6} + d_x\right)^2 - \left(e_{n=1...6} + f_x\right)^2}$$

<div align="right">1-14</div>

Pro Aktuator erhält man somit zwei translatorische Extrempositionen für jede eingesetzte Länge. Verwendet man nun die maximale und die minimale Aktuatorlänge, ergeben sich daraus 24 Extremwerte. Die für die momentane Lage geltende Grenze des Bewegungsbereiches in der untersuchten Koordinatenrichtung sind die zur angeblichen Position nächstliegenden Punkte. Die Werte für

$$r_{y,n=1...6} = c + d_x$$

<div align="right">1-15</div>

und

$$r_{z,n=1...6} = e + f_x$$

sind direkt ermittelbar. Dies ist wegen der nicht veränderten Koordinaten der oberen Gelenkpunkte in den beiden Freiheitsgraden leicht einzusehen.

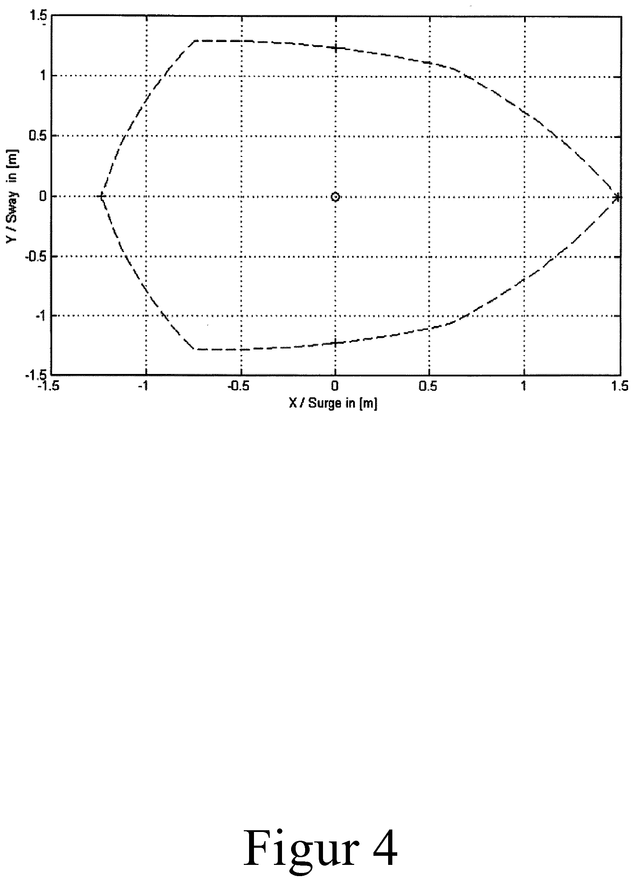

Figur 4 zeigt als Ergebnisbeispiel den Bewegungsraum in X- und Y-Richtung.

Hierfür wurde zunächst die Bewegungsgrenze in X-Richtung, ausgehend von der momentanen Position und Lage des Oberrahmens berechnet. Die Position und Lage des Oberrahmens im Beispiel der Figur 4 ist dabei im Koordinatenursprung.

Anschließend wurde für verschiedene X-Werte innerhalb der berechneten Bewegungsgrenze für X jeweils die Bewegungsgrenze in Y-Richtung berechnet, so dass sich für verschiedene X-Werte jeweils verschiedene Y-Werte ergeben. Als Ergebnis erhält man dabei die Grenze des Bewegungsraumes, die die Plattform bei Z=0 und einer aktuellen Position im Koordinatenursprung anfahren kann.

Der Vorteil dieses Verfahren besteht darin, dass dieser Bewegungsraum deterministisch und analytisch berechenbar ist, so dass dieses Verfahren grundsätzlich echtzeitfähig ist.

**Patentansprüche**

1. Verfahren zum Ermitteln einer Bewegungsgrenze eines Bewegungssystems, das eine mittels Aktuatoren gegenüber einer festen Referenzebene in mehreren Freiheitsgraden bewegbare Plattform aufweist, wobei die Aktuatoren sowohl an der festen Referenzebene als auch an der bewegbaren Plattform gelenkig angeordnet und zur Längenänderung zum Bewegen der bewegbaren Plattform ausgebildet sind, mit den durch eine mikroprozessorgesteuerten Recheneinheit ausgeführten Schritten:

   a) Festlegen eines Freiheitsgrades des Bewegungssystems, für den die Bewegungsgrenze ermittelt werden soll,
   b) Bereitstellen eines aktuellen Bewegungssystemzustandes des Bewegungssystems in Bezug auf ein vorgegebenes Koordinatensystem,
   c) Berechnen einer Gelenktrajektorie für jeden oberen Gelenkpunkt der Aktuatoren an der bewegbaren Plattform entlang des festgelegten Freiheitsgrades unter Berücksichtigung des aktuellen Bewegungssystemzustandes im vorgegebenen Koordinatensystem,
   d) Berechnen der maximal möglichen Position jedes oberen Gelenkpunktes auf seiner berechneten Gelenktrajektorie in Richtung des festgelegten Freiheitsgrades in Abhängigkeit von einer extremalen Auslenkung des entsprechenden Aktuators des jeweiligen oberen Gelenkpunktes, und
   e) Berechnen der Bewegungsgrenze des Bewegungssystems in Bezug auf den festgelegten Freiheitsgrad in Abhängigkeit von den maximal möglichen Positionen der oberen Gelenkpunkte auf ihren Gelenktrajektorien,

   **dadurch gekennzeichnet, dass** die maximal mögliche Position eines oberen Gelenkpunktes auf seiner berechneten Gelenktrajektorie in Richtung des festgelegten Freiheitsgrades berechnet wird, indem ein Bewegungsraum des jeweiligen Aktuators in Bezug auf seine extremale Auslenkung bei einer Bewegung des Aktuators um den unteren Gelenkpunkt an der festen Referenzebene und der Schnittpunkt der berechneten Gelenktrajektorie des jeweiligen oberen Gelenkpunktes mit dem Bewegungsraum des Aktuators berechnet wird.

2. Verfahren nach Anspruch 1, **dadurch gekennzeichnet, dass** die Freiheitsgrade des Bewegungssystems die translatorischen oder rotatorischen Freiheitsgrade sind.

3. Verfahren nach Anspruch 1 oder 2, **dadurch gekennzeichnet, dass** der aktuelle Bewegungssystemzustand mittels Sensoren erfasst und dann bereitgestellt wird.

4. Verfahren nach einem der vorhergehenden Ansprüche, **dadurch gekennzeichnet, dass** der Bewegungssystemzustand die Lage und/oder Position der Plattform bezüglich des vorgegebenen Koordinatensystems ist.

5. Verfahren nach einem der vorhergehenden Ansprüche, **dadurch gekennzeichnet, dass** der Bewegungssystemzustand die Lage, Position und/oder Auslenkung der Aktuatoren bezüglich des vorgegebenen Koordinatensystems ist.

6. Verfahren nach einem der vorhergehenden Ansprüche, **dadurch gekennzeichnet, dass** zunächst für einen ersten festgelegten Freiheitsgrad des Bewegungssystems die Bewegungsgrenze ermittelt wird, wobei anschließend für verschiedene angenommene Werte des ersten festgelegten Freiheitsgrades innerhalb der Bewegungsgrenze jeweils die Bewegungsgrenze für einen zweiten festgelegten Freiheitsgrad berechnet wird, um die Bewegungsgrenze für einen durch den ersten und zweiten Freiheitsgrad definierten Bewegungsraum zu erhalten.

**7.** Verfahren nach einem der vorhergehenden Ansprüche, **dadurch gekennzeichnet, dass** das Bewegungssystem eine Stewart-Gough-Plattform mit vorzugsweise sechs Aktuatoren ist.

**8.** Computerprogrammprodukt mit Programmcodemitteln eingerichtet zur Durchführung des Verfahrens nach einem der Ansprüche 1 bis 7, wenn das Computerprogramm auf einer Rechenmaschine ausgeführt wird.

**9.** Vorrichtung zum Ermitteln einer Bewegungsgrenze eines Bewegungssystems eingerichtet zur Durchführung des Verfahrens nach einem der Ansprüche 1 bis 7.

**10.** Verfahren zur Ansteuerung eines Bewegungssystems zur Simulation von Bewegungen und/oder Beschleunigungen, **dadurch gekennzeichnet, dass** der aktuelle Bewegungssystemzustand des Bewegungssystems mittels Sensoren erfasst und Steuersignale zur Ansteuerung der Aktuatoren des Bewegungssystems zur Simulation einer Bewegung und/oder Beschleunigung generiert werden, wobei die Steuersignale in Abhängigkeit von dem aktuellen Bewegungssystemzustand und einer ermittelten Bewegungsgrenze des Bewegungssystems generiert werden, wobei die Bewegungsgrenze des Bewegungssystems gemäß dem Verfahren nach einem der Ansprüche 1 bis 7 berechnet werden.

**11.** Computerprogrammprodukt mit Programmcodemitteln eingerichtet zur Durchführung des Verfahrens nach Anspruch 10, wenn das Computerprogramm auf einer Rechenmaschine ausgeführt wird.

**12.** Steuervorrichtung zur Ansteuerung eines Bewegungssystems, die zur Durchführung des Verfahrens gemäß Anspruch 10 eingerichtet ist.

**13.** Simulator zur Simulation von Bewegungen und/oder Beschleunigungen mit einem Bewegungssystem und einer Steuervorrichtung nach Anspruch 12.

**Claims**

**1.** Method for determining a movement limit of a movement system which has a platform which can be moved in several degrees of freedom with respect to a fixed reference plane by means of actuators, wherein the actuators are arranged in an articulated fashion both in the fixed reference plane and on the movable platform and are designed to change length in order to move the movable platform, comprising the steps which are carried out by means of a microprocessor-controlled computing unit:

a) defining a degree of freedom of the movement system for which the movement limit is to be determined,
b) making available a current movement system state of the movement system with respect to a predefined coordinate system,
c) calculating an articulation trajectory for each upper articulation point of the actuators at the movable platform along the fixed degree of freedom taking into account the current movement system state in the predefined coordinate system,
d) calculating the maximum possible position of each upper articulation point on its calculated articulation trajectory in the direction of the defined degree of freedom as a function of an extreme deflection of the corresponding actuator of the respective upper articulation point, and
e) calculating the movement limit of the movement system with respect to the defined degree of freedom as a function of the maximum possible positions of the upper articulation points on their articulation trajectories, **characterized in that** the maximum possible position of an upper articulation point on its calculated articulation trajectory is calculated in the direction of the defined degree of freedom **in that** a movement space of the respective actuator with respect to its extreme deflection in the case of a movement of the actuator about the lower articulation point in the fixed reference plane is calculated, and the point of intersection of the calculated articulation trajectory of the respective upper articulation point with the movement space of the actuator is calculated.

**2.** Method according to Claim 1, **characterized in that** the degrees of freedom of the movement system are the translational or rotational degrees of freedom.

**3.** Method according to Claim 1 or 2, **characterized in that** the current movement system state is detected by means of sensors and then made available.

**4.** Method according to one of the preceding claims, **characterized in that** the movement system state is the location and/or position of the platform with respect to the predefined coordinate system.

**5.** Method according to one of the preceding claims, **characterized in that** the movement system state is the location, position and/or deflection of the actuators with respect to the predefined coordinate system.

**6.** Method according to one of the preceding claims, **characterized in that** firstly the movement limit is determined for a first defined degree of freedom of the movement system, wherein subsequently in each case the movement limit for a second defined degree of freedom is calculated for various assumed values of the first defined degree of freedom within the movement limit, in order to obtain the movement limit for a movement space which is defined by the first and second degrees of freedom.

**7.** Method according to one of the preceding claims, **characterized in that** the movement system is a Stewart-Gough platform with preferably six actuators.

**8.** Computer program product with program code means configured for carrying out the method according to one of Claims 1 to 7, when the computer program is executed on a computing machine.

**9.** Device for determining a movement limit of a movement system configured for carrying out the method according to one of Claims 1 to 7.

**10.** Method for actuating a movement system in order to simulate movements and/or accelerations, **characterized in that** the current movement system state of the movement system is detected by means of sensors, and control signals for actuating the actuators of the movement system in order to simulate a movement and/or an acceleration are generated, wherein the control signals are generated as a function of the current movement system state and a determined movement limit of the movement system, wherein the movement limit of the movement system is calculated in accordance with the method according to one of Claims 1 to 7.

**11.** Computer program product with program code means configured for carrying out the method according to Claim 10 when the computer program is executed on a computing machine.

**12.** Control device for actuating a movement system, which control device is configured for carrying out the method according to Claim 10.

**13.** Simulator for simulating movements and/or accelerations with a movement system and a control device according to Claim 12.

**Revendications**

**1.** Procédé de détermination d'une limite de mouvement d'un système de mouvement qui présente une plate-forme mobile dans plusieurs degrés de liberté par rapport à un plan de référence fixe au moyen d'actionneurs, les actionneurs étant disposés en articulation aussi bien sur le plan de référence fixe que sur la plate-forme mobile et étant réalisés pour modifier la longueur afin de déplacer la plate-forme mobile, comprenant les étapes exécutées par une unité de calcul commandée par microprocesseur et consistant à :

   a) définir un degré de liberté du système de mouvement pour lequel la limite de mouvement doit être déterminée,
   b) fournir un état actuel du système de mouvement par rapport à un système de coordonnées prédéfini,
   c) calculer une trajectoire d'articulation pour chaque point d'articulation supérieur des actionneurs sur la plate-forme mobile le long du degré de liberté défini, en tenant compte de l'état actuel du système de mouvement dans le système de coordonnées prédéfini,
   d) calculer la position maximale possible de chaque point d'articulation supérieur sur sa trajectoire d'articulation calculée dans la direction du degré de liberté défini, en fonction d'une déviation extrémale de l'actionneur correspondant du point d'articulation supérieur respectif, et

e) calculer la limite de mouvement du système de mouvement par rapport au degré de liberté défini, en fonction des positions maximales possibles des points d'articulation supérieurs sur leurs trajectoires d'articulation, **caractérisé en ce que** la position maximale possible d'un point d'articulation supérieur sur sa trajectoire d'articulation calculée dans la direction du degré de liberté défini est calculée en calculant un espace de mouvement de l'actionneur respectif par rapport à sa déviation extrémale lors d'un mouvement de l'actionneur autour du point d'articulation inférieur sur le plan de référence fixe et en calculant l'intersection de la trajectoire d'articulation calculée du point d'articulation supérieur respectif avec l'espace de mouvement de l'actionneur.

2. Procédé selon la revendication 1, **caractérisé en ce que** les degrés de liberté du système de mouvement sont les degrés de liberté en translation ou en rotation.

3. Procédé selon la revendication 1 ou 2, **caractérisé en ce que** l'état actuel du système de mouvement est détecté au moyen de capteurs, puis mis à disposition.

4. Procédé selon l'une des revendications précédentes, **caractérisé en ce que** l'état du système de déplacement est l'emplacement et/ou la position de la plate-forme par rapport au système de coordonnées prédéfini.

5. Procédé selon l'une des revendications précédentes, **caractérisé en ce que** l'état du système de mouvement est l'emplacement, la position et/ou la déviation des actionneurs par rapport au système de coordonnées prédéfini.

6. Procédé selon l'une des revendications précédentes, **caractérisé en ce que** la limite de mouvement est d'abord déterminée pour un premier degré de liberté défini du système de mouvement, puis la limite de mouvement respective est calculée pour un deuxième degré de liberté défini, pour différentes valeurs supposées du premier degré de liberté défini, à l'intérieur de la limite de mouvement, afin d'obtenir la limite de mouvement pour un espace de mouvement défini par les premier et deuxième degrés de liberté.

7. Procédé selon l'une des revendications précédentes, **caractérisé en ce que** le système de mouvement est une plateforme de Stewart-Gough comprenant de préférence six actionneurs.

8. Produit de programme informatique comprenant des moyens de code de programme, conçu pour mettre en œuvre le procédé selon l'une des revendications 1 à 7, lorsque le programme informatique est exécuté sur une machine de calcul.

9. Dispositif de détermination d'une limite de mouvement d'un système de mouvement, conçu pour mettre en œuvre le procédé selon l'une des revendications 1 à 7.

10. Procédé de commande d'un système de mouvement pour simuler des mouvements et/ou des accélérations, **caractérisé en ce que** l'état actuel du système de mouvement est détecté au moyen de capteurs, et des signaux de commande sont générés pour commander les actionneurs du système de mouvement pour simuler un mouvement et/ou une accélération, les signaux de commande étant générés en fonction de l'état actuel du système de mouvement et d'une limite de mouvement déterminée du système de mouvement, la limite de mouvement du système de mouvement étant calculée conformément au procédé selon l'une des revendications 1 à 7.

11. Produit de programme informatique comprenant des moyens de code de programme, conçu pour mettre en œuvre le procédé selon la revendication 10, lorsque le programme informatique est exécuté sur une machine de calcul.

12. Dispositif de commande pour commander un système de mouvement, qui est conçu pour mettre en œuvre le procédé selon la revendication 10.

13. Simulateur pour simuler des mouvements et/ou des accélérations, comportant un système de mouvement et un dispositif de commande selon la revendication 12.

Figur 1a

Figur 1b

# Figur 2

Figur 3

Figur 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012103870 A1

- CA 2744444 A1

**In der Beschreibung aufgeführte Nicht-Patentliteratur**

- The Kinematic Design of Flight Simulator Motion-Bases. **SUNJOO K. ADVANI.** Proefschrift ter verkjging van den grad van doctor. TU Delft, 1998